# EUROPEAN PATENT SPECIFICATION

(11) **EP 2 866 280 B1**
(45) Date of publication and mention of the grant of the patent: **11.01.2017**
(21) Application number: 14183355.8
(22) Date of filing: 03.09.2014
(51) Int. Cl.: H01M 2/26, H01M 2/16, H01M 10/04, H01M 4/66

(54) **Rechargeable secondary battery**
Wiederaufladbare Sekundärbatterie
Batterie secondaire rechargeable

(30) Priority: 23.10.2013 KR 20130126566
(43) Date of publication of application: 29.04.2015
(73) Proprietor: Samsung SDI Co., Ltd., Yongin-si, Gyeonggi-do (KR)
(72) Inventor: Lee, Junyong, Yongin-si, Gyeonggi-do (KR); Yoo, Seungyeol, Yongin-si, Gyeonggi-do (KR); Lee, Huijun, Yongin-si, Gyeonggi-do (KR)
(74) Representative: Ludwig, Ingo

(56) References cited:
- EP-A1- 1 096 582
- EP-A2- 1 744 393
- EP-A2- 2 472 642
- WO-A2-2009/048303
- JP-A- H08 115 744

## Description

### Background of the Invention

### 1. Field of the Invention

The invention relates to a rechargeable battery comprising an electrode assembly, a collector plate connecting the electrode assembly to a terminal of the battery, the electrode assembly comprising an electrode, wherein the electrode is welded directly to the collector plate, wherein the rechargeable battery further comprises a light absorbing member that is coupled to the electrode and that is in close contact with the collector plate, and wherein the collector plate has a width extending perpendicular to a lengthwise direction of the electrode assembly, wherein the collector plate is welded to the electrode assembly and contacts the light absorbing member across the width.

### 2. Description of the Related Art

A rechargeable lithium ion secondary battery may be used, for example, in a small-sized electronic device, such as a notebook computer or a cellular phone. Also, because recently developed rechargeable lithium ion secondary batteries have advantageous characteristics, including high output power, high capacity, and lightness in weight, as compared to other types of rechargeable secondary batteries, they are widely used in hybrid vehicles or electric vehicles. Rechargeable secondary batteries are disclosed in e.g. EP 1 096 582 A1, EP 2 472 642 A2, EP 1 744 393 A2, WO 2009/048303 A2 and JP H08 115744 A.

In the manufacturing process of the rechargeable secondary battery, a collector plate is generally welded to an electrode assembly by a laser beam. For example, an active material non-coating portion of the electrode assembly is inserted into a slit of the collector plate, followed by irradiating laser beam, thereby electrically connecting the collector plate to the electrode assembly.

However, according to the manufacturing process, since the laser beam may be induced to the inside of the active material non-coating portion, a separator and/or an electrode plate are vulnerable to damages, thereby resulting in internal short circuit between electrode plates.

### Brief Summary of the Invention

Hence, it is an object oft he invention to provide a rechargeable battery that can be easily produced with a high yield. In particular, the present invention provides a rechargeable secondary battery, which can prevent a separator and/or electrode plates from being damaged and can prevent the electrode plates from being internally short circuited by preventing laser beam and/or spatter from being induced into an active material non-coating portion of an electrode assembly when a collector plate is laser-welded to the electrode assembly.

This object is achieved for the rechargeable battery mentioned in the beginning in that the light absorbing member is an electrical insulator.

The light absorbing member effectively protects internal components of the battery, e.g. the separator and/or electrode plates from being damaged, as the light absorbing member blocks the laser beam during the welding process, such that the laser beam cannot readily reach the internal components of the battery. Furthermore, spatter caused by the welding process is blocked by the light absorbing member, too.

The solutions according to the invention can be combined as desired and further improved by the following embodiments that are advantageous on their own, in each case.

The light absorbing member is an electrical insulator in order to prevent undesired electrical contacts caused by the light absorbing member.

In particular, the light absorbing member comprises or even consists of polypropylene (PP), polyethylene (PE) or ethylene propylene diene monomer (EPDM) or a mixture thereof, with which the light absorbing member can be easily and economically manufactured.

The collector plate is preferably welded to an end of the electrode in a lengthwise direction of the electrode, and the light absorbing member is positioned on a side of the electrode in a direction perpendicular to the lengthwise direction. Hence, the weld connection between the electrode and the collector plate and the light absorbing member are arranged in a space-saving manner.

The electrode comprises an active material coating portion and an active material non-coating portion, wherein the collector plate is welded to and the light absorbing member is preferably coupled to the active material non-coating portion. Thus, the invention provides a rechargeable secondary battery, which can maximize an internal margin (active material coating area) of an electrode assembly by welding the collector plate to the electrode assembly by laser welding in a direction parallel to the lengthwise direction of the electrode assembly, which simplifies the design of the collector plate and which reduces the number of manufacturing process steps. Hence, the active material coating portion is separated from the collector plate and protected by the light absorbing member.

The collector plate and the non-coating portion are laser-welded to each other at a laser-welded portion, wherein the light absorbing member can define a barrier between the laser-welded portion and the active material coating portion, thereby protecting in particular the active material coating portion from the laser beam.

In order to define the barrier and to protect the active material coating portion, the light absorbing member is preferably positioned between the active material coating portion and the collector plate.

An essentially impermeable barrier can be provided, in case the light absorbing member fills a space between the active material coating portion and the collector plate. In particular, the space between the active material coating portion and the collector plate may be filled by the light absorbing member in combination or together with the active material non-coating portion.

The active material non-coating portion may include a first region parallel to a lengthwise direction of the active material coating portion, a second region at a distance to the first region perpendicular to the lengthwise direction of the active material coating portion, and a bent region formed between the first region and the second region. Thus, the collector plate can be dimensioned smaller perpendicular to the lengthwise direction of the active material coating portion and compared to the electrode assembly, thereby reducing space required for the collector plate and its weight.

The light absorbing member is preferably positioned at an outermost region of the electrode assembly, such that the space available for the active material coating portion can be maximized without increasing the size of the battery.

The collector plate has a width extending perpendicular to a lengthwise direction of the electrode assembly. The collector plate is welded to the electrode assembly and contacts the light absorbing member across the width, thereby maximizing the contact area of the collector plate available for contacting the electrode assembly.

The battery may comprise two light absorbing members, between which the electrode extends. Hence, the electrode assembly is protected from being damaged independently of the direction of the laser beam used for laser welding.

The electrode assembly may comprise two electrodes that are welded to the collector plate. The light absorbing member is preferably positioned between the two electrodes and may even contact both of the electrodes, such that only one light absorbing member can be used for preventing that the laser extends along the electrodes and damages the electrode assembly.

The collector plate may have an essentially clamp-, C- or U-shaped cross-section and encompasses the electrode and the light absorbing member. Hence, by encompassing the electrode and the light absorbing member, an easy positioning of the electrode and the light absorbing member with respect to the collector plate during assembly of the battery is facilitated.

The electrode assembly can comprises two electrodes and a second collector plate, wherein each of the electrodes is welded to another one of the collector plates and wherein one light absorbing member is coupled to each of the electrodes and is in close contact to each of the collector plates. Thus, the collector plates can each be laser welded to one of the electrodes without the risk that the electrode assembly is damaged by the laser beam used.

The rechargeable secondary battery may include a case, the electrode assembly accommodated in the case, the light absorbing member coupled to the electrode assembly, the collector plate welded to the electrode assembly and making close contact with the light absorbing member, and the terminal connected to the collector plate and extending to the outside of the case.

In order to avoid undesired reflections oft he laser beam, a color of the light absorbing member may be black, such that the light absorbing member has a high light absorption coefficient.

The electrode assembly may further include the separator making close contact with the active material coating portion, and the separator may be separated from the collector plate by the light absorbing member.

The collector plate may include a first region connected to the terminal, a second region extending from the first region and welded to the end in the lengthwise direction of the active material non-coating portion of the electrode assembly, and a bent region formed between the first region and the second region.

The electrode assembly may include a first electrode plate including a first coating portion and a first non-coating portion, a second electrode plate including a second coating portion and a second non-coating portion, and the separator disposed between the first and second electrode plates, wherein the battery comprises: a first light absorbing member coupled to the first non-coating portion, and a second light absorbing member coupled to the second non-coating portion.

When the collector plate and the electrode assembly are laser-welded to each other, the first light absorbing member may prevent the laser beam from being induced to the first coating portion of the first electrode plate, the second coating portion of the second electrode plate and the separator.

When the collector plate and the electrode assembly are laser-welded to each other, the second light absorbing member may prevent the laser beam from being induced to the first coating portion of the first electrode plate, the second coating portion of the second electrode plate and the separator.

As described above, in the rechargeable secondary battery according to the embodiment of the present invention, since the light absorbing member having a high light absorption coefficient is interposed between active material non-coating portions in the electrode assembly, it is possible to prevent a separator and/or electrode plates from being damaged and to prevent the electrode plates from being internally short circuited by preventing laser beam and/or spatter from being induced into an active material non-coating portion of an electrode assembly when a collector plate is laser-welded to the electrode assembly.

In addition, the rechargeable secondary battery can maximize an internal margin (active material coating area) of an electrode assembly by welding a collector plate to an electrode assembly by laser beam in a direction parallel to a lengthwise direction of the electrode assembly, rather than in a direction perpendicular to the lengthwise direction of the electrode assembly, can simplify a design of the collector plate, and can reduce the number of manufacturing process steps.

The above mentioned lengthwise directions may be parallel directions, which point into the same direction.

Additional aspects and/or advantages of the invention will be set forth in part in the description which follows and, in part, will be obvious from the description, or may be learned by practice of the invention.

The invention is described hereinafter in more detail and in an exemplary manner using advantageous embodiments and with reference to the schematic drawings. The embodiments are merely possible configurations in which, however, the individual features as described above can be provided independently of one another and can be omitted in the drawings.

### Brief Description of the Drawings

The objects, features and advantages of the present invention will be more apparent from the following detailed description in conjunction with the accompanying drawings, in which:
FIG. 1a is a perspective view of a rechargeable secondary battery according to an embodiment of the present invention, FIG. 1b is a cross-sectional view taken along the line 1 b-1 b of FIG. 1 a,
FIG. 1c is a cross-sectional view taken along the line 1c-1c of FIG. 1a, and FIG. 1d is a partially perspective view of a collector plate and structures of elements around the collector plate;
FIG. 2 is a cross-sectional view illustrating a welding structure of a collector plate and an electrode assembly according to an embodiment of the present invention;
FIG. 3 is a cross-sectional view illustrating a welding structure of a collector plate and an electrode assembly according to another embodiment of the present invention;
FIG. 4 is a perspective view illustrating a winding method of an electrode assembly in a rechargeable secondary battery according to an embodiment of the present invention;
FIGS. 5a to 5d are cross-sectional views illustrating a welding method of a collector plate and an electrode assembly in a rechargeable secondary battery according to an embodiment of the present invention; and
FIGS. 6a to 6d are cross-sectional views illustrating a welding method of a collector plate and an electrode assembly in a rechargeable secondary battery according to another embodiment of the present invention.

### Detailed Description of the Invention

Example embodiments will now be described more fully hereinafter with reference to the accompanying drawings; however, they may be embodied in different forms. Rather, these embodiments are provided so that this disclosure will be thorough and complete, and will fully convey the scope of the disclosure to those skilled in the art.

Like reference signs refer to like elements throughout. As used herein, the term "and/or" includes any and all combinations of one or more of the associated listed items.

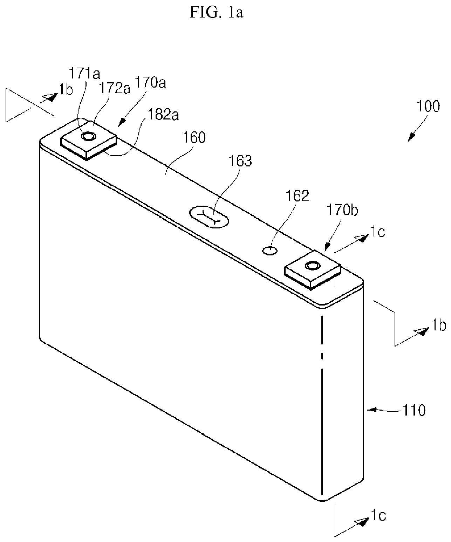

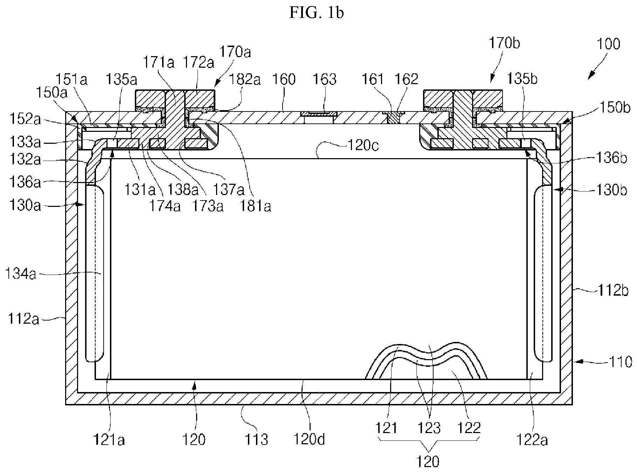

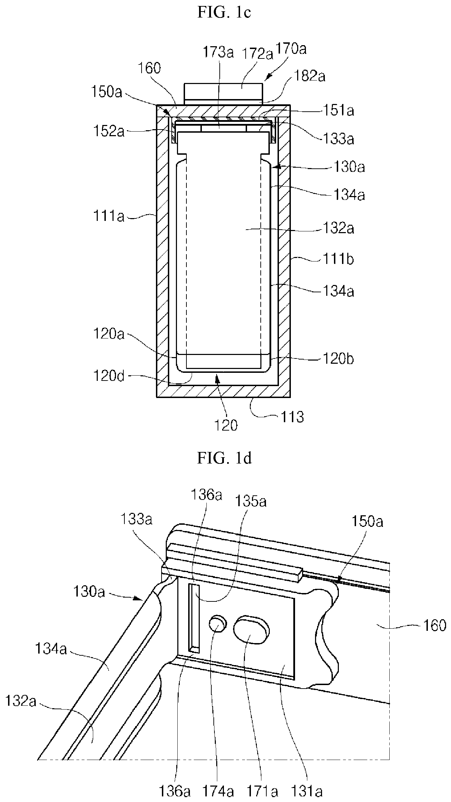

FIG. 1a is a perspective view of a rechargeable secondary battery according to an embodiment of the present invention, FIG. 1b is a cross-sectional view taken along the line 1 b-1 b of FIG. 1 a,

FIG. 1c is a cross-sectional view taken along the line 1c-1c of FIG. 1a, and FIG. 1d is a partially perspective view of a collector plate and structures of elements around the collector plate, and

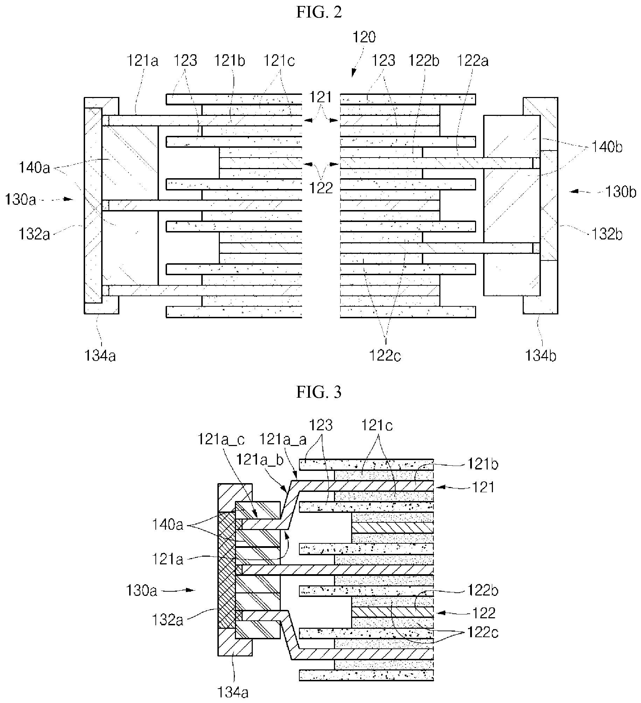

FIG. 2 is a cross-sectional view illustrating a welding structure of a collector plate and an electrode assembly according to an embodiment of the present invention.

As illustrated in FIGS. 1a to 1d and FIG. 2, the rechargeable secondary battery 100 according to the embodiment of the present invention includes a case 110, an electrode assembly 120, a first collector plate 130a, first light absorbing members 140a, a first insulation member 150a, a second collector plate 130b, second light absorbing members 140b, a second insulation member 150b, a cap plate 160, a first terminal 170a and a second terminal 170b.

While one electrode assembly 120 is show in FIG. 1c, embodiments are not limited thereto, for example, there may be greater than one electrode assembly 120. In embodiments of the present invention, the case 110 may refer to a can, and/or may encompass the cap plate 160.

The case 110 includes a pair of long side walls 111 a and 111 b that are substantially planar and face each other, a pair of short side walls 112a and 112b that connect the long side walls 111 a and 111 b and face each other, and a bottom wall 113 connecting the long side walls 111 a and 111 b to the short side walls 112a and 112b. Here, areas of the long side walls are larger than those of the short side walls. In addition, the case 110 may have an open top area sealed with the cap plate 160. The electrode assembly 120 and an electrolyte solution are accommodated in the case 110. The case 110 may be made of one material selected from the group consisting of aluminum, an aluminum alloy, copper, a copper alloy, iron, an iron alloy, stainless steel and equivalents thereof, but aspects of the present invention are not limited thereto.

The electrode assembly 120 may include a pair of long side areas 120a and 120b that are substantially planar and face each other, and a pair of short side areas 120c and 120d that connect the long side areas 120a and 120b and face each other. Here, the long side areas are wider than the short side areas.

In the electrode assembly 120, first non-coating portions 121a that are not coated with a first active material (not shown) and second non-coating portions 122a that are not coated with a second active material (not shown) extend, for example, a predetermined length in opposite directions. That is to say, the first non-coating portions 121 a may extend and protrude to one side a predetermined length through the long side areas 120a and 120b and the short side areas 120c and 120d, and the second non-coating portions 122a may extend and protrude to the other side a predetermined length through the long side areas 120a and 120b and the short side areas 120c and 120d. In addition, the first non-coating portions 121a and the second non-coating portions 122a of the electrode assembly 120 may extend a predetermined length toward the short side walls 112a and 112b provided in the case 110, respectively.

The electrode assembly 120 may be formed by winding or laminating a stacked structure having a first electrode plate 121, a second electrode plate 122, and a separator 123 interposed between the first and second electrode plates 121 and 122, which are formed of a thin plate or layer. Here, the first electrode plate 121 may function as a positive electrode and the second electrode plate 122 may function as a negative electrode, or vice versa.

The first electrode plate 121 may be formed by applying a first electrode active material 121c (to be referred to as a first coating portion), such as a transition metal, on the first electrode collector plate 121 b formed of, for example, aluminum or aluminum foil. The first electrode plate 121 may include first non-coating portions 121 a on which the first electrode active metal is not applied. The first non-coating portions 121a may function as passages for current flowing between the first electrode plate 121 and the outside of the first electrode plate 121. The present invention does not limit the material of the first electrode plate 121 to those listed herein.

The second electrode plate 122 may be formed by applying a second electrode active material 122c (to be referred to as a second coating portion), such as graphite or carbon, on the second electrode collector plate 122b formed of metal foil, such as copper, a copper alloy or nickel. The second electrode plate 122 may include second non-coating portions 122a on which the second electrode active metal is not applied. The second non-coating portions 122a may function as passages for current flowing between the second electrode plate 122 and the outside of the second electrode plate 122. The present invention, however, does not limit the material of the second electrode plate 122 to those listed herein. In other embodiments, the relative polarities of the first and second electrode plates 121 and 122 may differ from what is described above.

The separator 123 may be positioned between the first electrode plate 121 and the second electrode plate 122 to prevent short circuiting and allow movement of lithium ions. The separator 123 may be formed of, for example, polyethylene, polypropylene, or a combined film of polypropylene and polyethylene. The present invention does not limit the material of the separator 123 to those listed herein.

The electrode assembly 120 and an electrolyte solution are accommodated within the case 110. The electrolyte solution may include an organic solvent, such as ethylene carbonate (EC), propylene carbonate (PC), diethyl carbonate (DEC), ethyl methyl carbonate (EMC), or dimethyl carbonate (DMC), and a lithium salt, such as LiPF6 or LiBF4. The electrolyte may be a liquid, a solid, or a gel.

The first light absorbing members 140a are coupled to the first non-coating portions 121a. That is to say, the first light absorbing members 140a are fitted into spaces between the plurality of first non-coating portions 121 a. In such a manner, the first active material 121 c of the first electrode plate 121, the separator 123 and the second electrode plate 122, which are positioned at one side of each of the first light absorbing members 140a, are not exposed to the outside. In other words, the first active material 121 c of the first electrode plate 121, the separator 123 and the second electrode plate 122 are separated from the first collector plate 130a by the first light absorbing members 140a. Therefore, in the laser welding process between the first collector plate 130a and the first non-coating portions 121 a, which will be described below, laser beam or spatter is not induced into the first active material 121c of the first electrode plate 121, the separator 123 and the second electrode plate 122.

Meanwhile, the first light absorbing members 140a may be electrical insulators. In addition, in the laser welding process to be described below, the first light absorbing members 140a may have a black-series color to increase an absorption coefficient of laser beam, but not limited thereto.

In detail, the first light absorbing members 140a may be made of one selected from the group consisting of polypropylene (PP), polyethylene (PE), ethylene propylene diene monomer (EPDM) and equivalents thereof, but not limited thereto. In an exemplary embodiment, a material not reacting with an electrolytic solution may be used in forming the first light absorbing members 140a.

The first collector plate 130a is positioned inside the case 110 and is electrically connected between a first terminal 170a and the electrode assembly 120. In detail, in one embodiment, the first collector plate 130a includes a substantially planar first region 131 a electrically connected to the first terminal 170a, a substantially planar second region 132a bent from the first region 131 a and electrically connected to the first non-coating portions 121 a of the electrode assembly 120, and a bent region 133a between the first region 131 a and the second region 132a. A third region 134a, which is bent from the second region 132a, may further be formed in the second region 132 to surround the outermost first non-coating portion 121 a.

Here, the substantially planar second region 132a of the first collector plate 130a is welded to ends in a lengthwise direction of the first non-coating portions 121 a. To this end, a widthwise direction of the second region 132a of the first collector plate 130a is substantially perpendicular to the lengthwise direction of the first non-coating portions 121 a. In addition, in order to prevent the laser welding process performed between the second region 132 of the first collector plate 130a and the ends in the lengthwise direction of the first non-coating portions 121a from being interfered, the first light absorbing members 140a may be substantially perpendicular to the lengthwise direction of the first non-coating portions 121 a.

In addition, a fuse hole 135a having a substantially rectangular shape is formed in the first region 131 a of the first collector plate 130a. A pair of fuse parts 136a, having relatively small cross-sectional areas, may be at opposite sides of the fuse hole 135a. In one embodiment, widths of the fuse parts 136a may be smaller than a width of the first region 131 a or the second region 132a. In the illustrated embodiment, through-holes are shown in the first region 131a to form the fuse parts 136a; however, cut portions may also be formed in the first region 131 a to form the fuse parts 136a. The fuse parts 136a may be fused by heat generated when an external short-circuit or over-charge occurs to the rechargeable secondary battery 100, thereby blocking a charge and/or discharge current. Accordingly, the safety of the rechargeable secondary battery 100 is improved.

In addition, coupling holes 137a and 138a may be formed in the first region 131 a of the first collector plate 130a to be coupled to a fastening region 171 a of the first terminal 170a and a coupling protrusion 174a, which will later be described.

Here, the first collector plate 130a may include aluminum, an aluminum alloy, titanium, stainless steel, gold, tantalum, niobium, hafnium, zirconium, vanadium, indium, cobalt, tungsten, tin, beryllium, molybdenum, and alloys thereof. However, the present invention does not limit the material of the first collector plate 130a to those listed herein. In an embodiment, when the first collector plate 130a is made of aluminum, the fuse parts 136a are also made of aluminum. The melting point of aluminum is approximately 659°C. Thus, if the fuse parts 136a reach a temperature of approximately 659°C due to an overcurrent, the fuse parts 136a may naturally melt and break.

The first insulation part 150a may be constructed such that it substantially surrounds the first region 131 a of the first collector plate 130a. In detail, the first insulation part 150a may be positioned between the cap plate 160 and the first region 131 a of the first collector plate 130a, and may surround the fastening region 171 a of the first terminal 170a, a flange 173a, and the first region 131 a of the first collector plate 130a. In more detail, the first insulation part 150a may include an upper region 151 a and approximately four side regions 152a. The upper region 151 a may be interposed between the first region 131 a of the first collector plate 130a and the flange 173a of the first terminal 170a, and the cap plate 160. The four side regions 152a may surround the side region of the first region 131 a of the first collector plate 130a, the fastening region 171 a of the first terminal 170a, and the side region of the flange 173a. The first insulation part 150a may be made of, for example, polyphenylene sulfide (PPS) (which does not react with the electrolyte solution) and equivalents thereof, but the present invention does not limit the material of the first insulation part 150a to those listed herein.

The cap plate 160 may cover an open portion of the case 110 while allowing the first terminal 170a to be exposed to or to protrude to the outside. A boundary between the case 110 and the cap plate 160 may be welded by laser beam. In addition, an electrolyte injection hole 161 may be formed in the cap plate 160. The electrolyte injection hole 161 may be closed by a plug 162, and a safety vent 163 having a relatively small thickness may also be in the cap plate 160. The cap plate 160 may be made of a substantially the same material as the case 110.

The first terminal 170a is electrically connected to the first collector plate 130a and outwardly extends a predetermined length while passing through the cap plate 160. That is to say, the first terminal 170a is coupled to the first region 131 a of the first collector plate 130a and outwardly extends a predetermined length while passing through the first insulation part 150a and the cap plate 160. The first terminal 170a may be electrically and mechanically coupled to the coupling hole 137a provided in the first region 131 a of the first collector plate 130a. The first terminal 170a may include a pillar-shaped fastening region 171 a, and a fixing region 172a fixed to the case 110 or the fastening region 171 a outside the cap plate 160 and having a bus bar (not shown) coupled thereto. In addition, a leaf-shaped flange 173a horizontally extending a predetermined length may further be formed inside the case 110 or in the cap plate 160 in the fastening region 171a. The flange 173a may include a coupling protrusion 174a coupled to the coupling hole 138a downwardly extending and provided in the first region 131 a of the first collector plate 130a. Here, a top surface of the flange 173a may make close contact with the upper region 151 a of the first insulation part 150a. In addition, the fuse parts 136a and the bent region 133a of the first collector plate 130a may be received in a predetermined space formed by the side regions 152a of the first insulation part 150a.

Here, the fastening region 171 a, the fixing region 172a, the flange 173a, and the coupling protrusion 174a, forming the first terminal 170a, may include one selected from the group consisting of aluminum, an aluminum alloy, and equivalents thereof, but the present invention does not limit the materials of the fastening region 171 a, the fixing region 172a, the flange 173a and the coupling protrusion 174a to those listed herein.

In addition, the fastening region 171 a positioned on the cap plate 160 may be coupled to the fixing region 172a to be riveted or welded, and the fastening region 171 a and the coupling protrusion 174a positioned under the cap plate 160 may be coupled to the coupling holes 137a and 138a provided in the first region 131 a of the first collector plate 130a to be riveted or welded.

The fastening region 171 a of the first terminal 170a may pass through the cap plate 160, and a seal gasket 181 a may further be formed on the outer circumference thereof. Therefore, the first terminal 170a may be insulated from the cap plate 160. In an embodiment, the seal gasket 181a may be made of polyphenylene sulfide (PPS) (which does not react with the electrolyte solution), but the present invention does not limit the material of the seal gasket 181a to that listed herein.

An upper insulation part 182a may be provided between the fixing region 172a and the case 110. The upper insulation part 182a may make close contact with the seal gasket 181 a. The upper insulation part 182a insulates the first fixing region 172a from the cap plate 160. In an embodiment, the upper insulation part 182a may be made of polyphenylene sulfide (PPS), but the present invention does not limit the material of the upper insulation part 182a to that listed herein. Further, when a battery has the case 110 and the cap plate 160 charged as a positive electrode, the fixing region 172a and the cap plate 160 may be electrically connected to each other by a high-resistance member (not shown).

Meanwhile, the second collector plate 130b, the second light absorbing members 140b and the second terminal 170b may be substantially the same as the first collector plate 130a, the first light absorbing members 140a and the first terminal 170a. In addition, a fuse hole 135b and a fuse part 136b may be provided in the second collector plate 130b. In some embodiments, the fuse opening 135b and the fuse part 136b may not be provided in the second collector plate 130b.

However, the second light absorbing members 140b are coupled to the second non-coating portions 122a. That is to say, the second light absorbing members 140b are fitted into spaces formed by a plurality of second non-coating portions 122a. In such a manner, the second active material 122c of the second electrode plate 122, the separator 123 and the first electrode plate 121, which are positioned at one side of each of the second light absorbing members 140b, are not exposed to the outside. In other words, the second active material 122c of the second electrode plate 122, the separator 123 and the first electrode plate 121 are separated from the second collector plate 130b by the second light absorbing members 140b. Therefore, in the laser welding process between the second collector plate 130b and the second non-coating portions 122a, which will be described below, laser beam or spatter is not induced into the second active material 122c of the second electrode plate 122, the separator 123 and the first electrode plate 121.

In addition, the first light absorbing members 140a and the second light absorbing members 140b extend a predetermined length in opposite directions. That is to say, the first light absorbing members 140a extend a predetermined length to one side through the long side areas 120a and 120b and the short side areas 120c and 120d of the electrode assembly 120, and the second light absorbing members 140b extend a predetermined length to the other side through the long side areas 120a and 120b and the short side areas 120c and 120d of the electrode assembly 120. In addition, the first light absorbing members 140a and the second light absorbing members 140b extend a predetermined length toward the short side walls 112a and 112b provided in the case 110.

As illustrated in FIG. 2, the light absorbing members 140a and 140b may be positioned in the active material non-coating portions 121 a and 122a at the outermost region of the electrode assembly 120 (see the right side region of FIG. 2) or may not be positioned in the active material non-coating portions 121a and 122a (see the left side region of FIG. 2). The outermost light absorbing members 140a and 140b may or may not be provided according to sizes or designs of the collector plates 130a and 130b, but aspects of the present invention are not limited thereto.

Since the first collector plate 130a and the second collector plate 130b, and the first light absorbing members 140a and the second light absorbing members 140b have substantially the same configurations, respectively, the following description will focus on the first collector plate 130a and the first light absorbing members 140a.

FIG. 3 is a cross-sectional view illustrating a welding structure of a collector plate and an electrode assembly according to another embodiment of the present invention.

As illustrated in FIG. 3, each of the first non-coating portions 121a includes a first region 121a_a substantially parallel to a lengthwise direction of the first coating portion 121c, a second region 121a_c substantially perpendicular to a widthwise direction of the first collector plate 130a, and a bent region 121a_b formed between the first region 121a_a and the second region 121a_c. For example, a second electrode plate 122 and two separators 123 are interposed between two first electrode plates 121 stacked one on the other. Thus, even if the first light absorbing members 140a are interposed between the two first non-coating portions 121 a stacked one on the other, a thickness formed by the two first non-coating portions 121 a may be smaller than the overall thickness of the electrode assembly 120. Therefore, as illustrated in FIG. 3, the first non-coating portions 121 a and the first light absorbing members 140a are pressed, and a thickness formed by the first non-coating portions 121 a and the first light absorbing members 140a may be smaller than the overall thickness of the electrode assembly 120. Accordingly, a first collector plate 130a may be designed such that a width of the first collector plate 130a is smaller than the overall width of the electrode assembly 120.

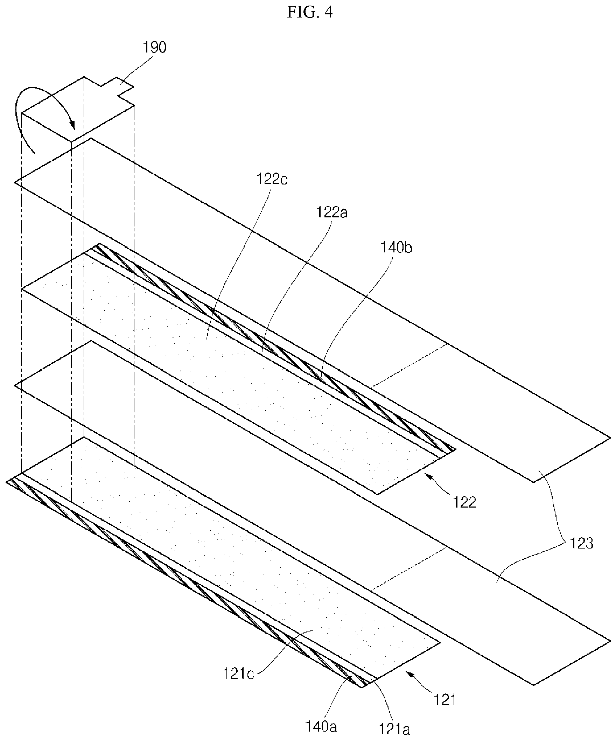

FIG. 4 is a perspective view illustrating a winding method of an electrode assembly in a rechargeable secondary battery according to an embodiment of the present invention.

As illustrated in FIG. 4, in a manufacturing method of the rechargeable secondary battery 100 according to the embodiment of the present invention, the rechargeable secondary battery 100 includes a first electrode plate 121, a second electrode plate 122, and two separators 123.

Here, the first electrode plate 121 includes a first coating portion 121c and first non-coating portions 121a, and first light absorbing members 140a are positioned on or attached to a top surface and/or a bottom surface of each of the first non-coating portions 121 a. In addition, a width of each of the first light absorbing members 140a may be equal to or smaller than a width of each of the first non-coating portions 121 a. In order to facilitate welding of the first collector plate 130a, the ends of the first non-coating portions 121 a are exposed to the outside through the first light absorbing members 140a.

In addition, the second electrode plate 122 includes a second active material coating portion 122c and second non-coating portions 122a, and second light absorbing members 140b are positioned on or attached to top surfaces and/or bottom surfaces of the second non-coating portions 122a. In addition, a width of each of the second light absorbing members 140b may be equal to or smaller than a width of each of the second non-coating portions 122a. In order to facilitate welding of the second collector plate 122, ends of the second non-coating portions 122a are exposed to the outside through the second light absorbing members 140b.

Meanwhile, two separators 123 positioned on the top and bottom surfaces of the second electrode plate 122 are longer than the first and second electrode plates 121 and 122, so that the outermost part of the electrode assembly 120 is surrounded by the separators 123, thereby improving the safety of the rechargeable secondary battery 100.

Lastly, a winder 190 makes close contact with a top end of the electrode assembly 120 and rotates in a clockwise direction, for example, thereby obtaining the electrode assembly 120 shown in FIG. 2.

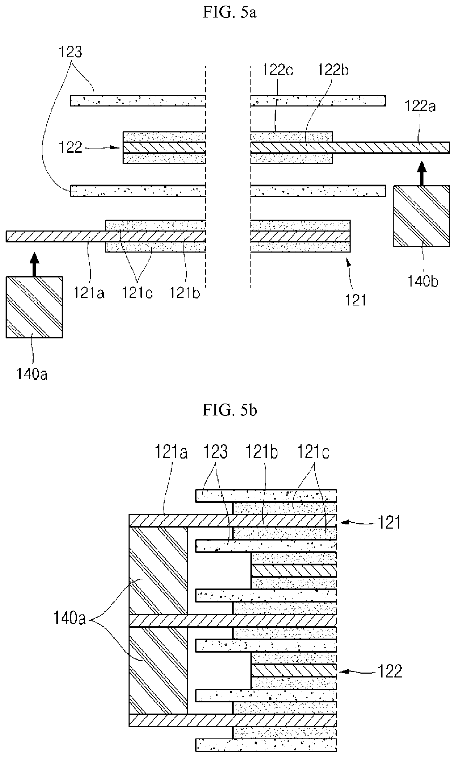

FIGS. 5a to 5d are cross-sectional views illustrating a welding method of a collector plate and an electrode assembly in a rechargeable secondary battery according to an embodiment of the present invention.

As illustrated in FIG. 5a, before the electrode assembly 120 is wound, the first light absorbing members 140a may be positioned on the bottom surfaces of the first non-coating portions 121a and the second light absorbing members 140b may be positioned on the bottom surfaces of the second non-coating portions 122a. Conversely, before the electrode assembly 120 is wound, the first light absorbing members 140a may be positioned on the top surfaces of the first non-coating portions 121 a and the second light absorbing members 140b may be positioned on the top surfaces of the second non-coating portions 122a.

Alternatively, before the electrode assembly 120 is wound, the first light absorbing members 140a may be positioned on the top and bottom surfaces of the first non-coating portions 121 a and the second light absorbing members 140b may be positioned on the top and bottom surfaces of the second non-coating portions 122a.

As illustrated in FIG. 5b, after the electrode assembly 120 is wound, the first light absorbing members 140a may be interposed between two first non-coating portions 121 a, for example. Here, the ends of the first non-coating portions 121 a are exposed to the outside through the first light absorbing members 140a. In addition, the first coating portion 121 c of the first electrode plate 121, the separators 123 and the second electrode plate 122 are not exposed to the outside through the first light absorbing members 140a.

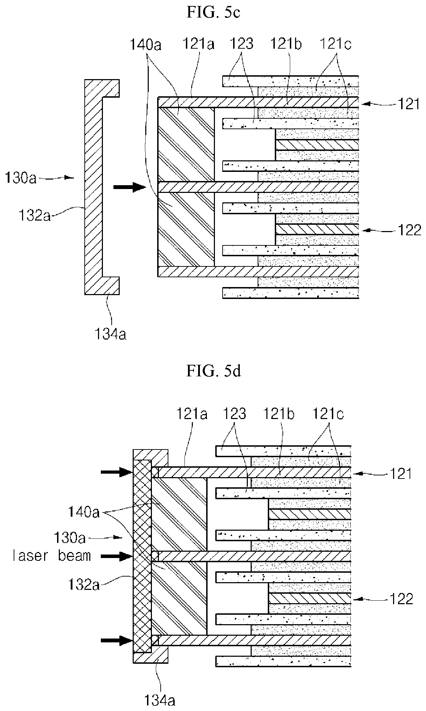

As illustrated in FIG. 5c, after the electrode assembly 120 is wound, the first collector plate 130a is coupled to the first non-coating portions 121 a. That is to say, the substantially planar second region 132a makes close contact with the first non-coating portions 121 a and the first light absorbing members 140a, the second region 132a having a substantially perpendicular width with respect to a lengthwise direction of the first non-coating portions 121 a of the first collector plate 130a. In addition, the third region 134a of the first collector plate 130a makes close contact with the outermost first non-coating portion 121 a.

As illustrated in Fig. 5d, laser beam is incident into the planar second region 132a of the first collector plate 130a. Here, the incident direction of the laser beam is substantially parallel to the lengthwise direction of the electrode assembly 120. Therefore, while the planar second region 132a of the first collector plate 130a and the ends of the first non-coating portions 121 a are melted and cooled, they are welded to each other. Here, even if the laser beam passes through the planar second region 132a of the first collector plate 130a, the first light absorbing members 140a absorb the laser beam, thereby preventing the laser beam and/or spatter from being incident into the first coating portion 121 c of the first electrode plate 121, the separators 123 and the second electrode plate 122.

Therefore, the separators 123 and/or the first and second electrode plates 121 and 122 can be prevented from being damaged and the first and second electrode plates 121 and 122 can be prevented from being internally short circuited.

In addition, since the welding using laser beam is performed in a substantially parallel direction with respect to a lengthwise direction of the electrode assembly 120, rather than in a direction perpendicular to the lengthwise direction of the electrode assembly 120, an internal margin (that is, an area of the first coating portion 121 c) of the electrode assembly 120 can be maximized by welding a collector plate to an electrode assembly by laser beam, a design of the first collector plate 130a can be simplified, and the number of manufacturing process steps can be reduced.

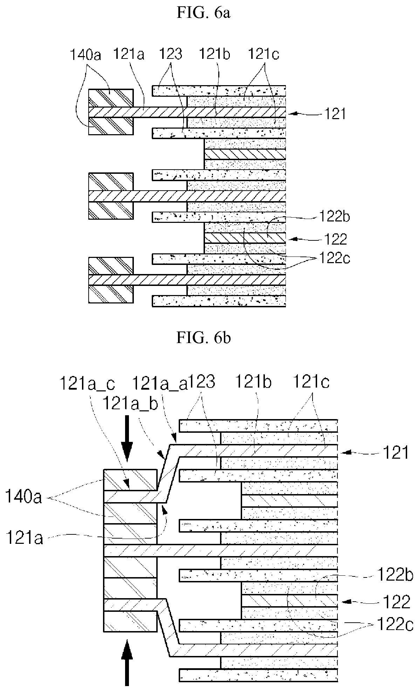

Figs. 6a to 6d are cross-sectional views illustrating a welding method of a collector plate and an electrode assembly in a rechargeable secondary battery according to another embodiment of the present invention.

As illustrated in Fig. 6a, a thickness of each of first light absorbing members 140a may be similar to a thickness of the first electrode plate 121 or the second electrode plate 122. In addition, the thickness of each of the first light absorbing members 140a may be similar to a thickness of each of separators 123. Further, the first light absorbing members 140a may be positioned on top surfaces and/or bottom surfaces of the first non-coating portions 121a.

In such a manner, before the first non-coating portions 121 a are bent, the first light absorbing members 140a adjacent to each other may be spaced apart from each other without making contact with each other.

As illustrated in Fig. 6b, a distance between the first non-coating portions 121 a is minimized by pressing the first non-coating portions 121 a. Accordingly, the adjacent first light absorbing members 140a may make close contact with each other. As the result of the pressing, the overall thickness of the first non-coating portions 121 a becomes smaller than the overall thickness of the electrode assembly 120.

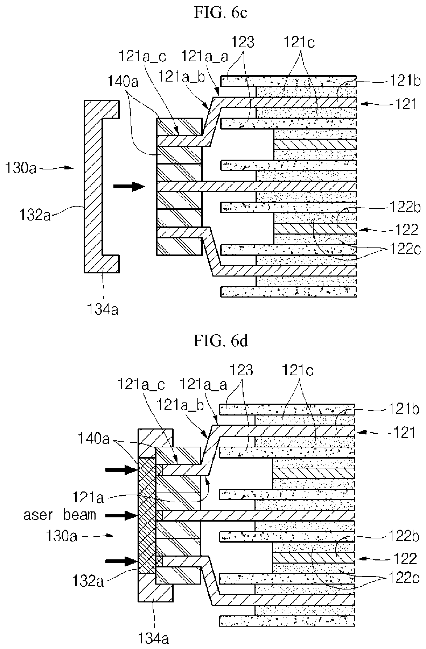

As illustrated in Fig. 6c, the first collector plate 130a is coupled to the compressed first non-coating portions 121 a. Here, the planar second region 132a of the first collector plate 130a makes contact with ends of the first non-coating portions 121 a, and the third region 134a makes close contact with the outermost first non-coating portion 121 a or the outermost first light absorbing member 140a.

As illustrated in Fig. 6d, laser beam is incident into the second region 132a of the first collector plate 130a. That is to say, the laser beam is incident in the substantially parallel direction with respect to the lengthwise direction of the electrode assembly 120. Therefore, the second region 132a of the first collector plate 130a and the first non-coating portions 121 a are melted and cooled, and they are electrically connected to each other.

Here, the first light absorbing members 140a prevent the laser beam and/or spatter from being induced into the first coating portion 121 c of the first electrode plate 121, the separators 123 and the second electrode plate 122, thereby preventing the first and second electrode plates 121 and 122 and the separators 123 from being damaged and preventing the first and second electrode plates 121 and 122 from being internally short circuited. In addition, an overall thickness formed by the first non-coating portions 121a and the first light absorbing members 140a is minimized by a pressing process of the first non-coating portions 121a, thereby minimizing a width of the first collector plate 130a, that is, the planar second region 132a.

## Claims

1. A rechargeable battery (100) comprising an electrode assembly (120), a collector plate (130a) connecting the electrode assembly (120) to a terminal (170a) of the battery (100), the electrode assembly (120) comprising an electrode (121), wherein the electrode (121) is welded directly to the collector plate (130a), wherein the rechargeable battery (100) further comprises a light absorbing member (140a) that is coupled to the electrode (121) and that is in close contact with the collector plate (130a), and wherein the collector plate (130a) has a width extending perpendicular to a lengthwise direction of the electrode assembly (120), wherein the collector plate (130a) is welded to the electrode assembly (120) and contacts the light absorbing member (140a) across the width, **characterized in that** the light absorbing member (140a) is an electrical insulator.

2. The rechargeable battery (100) of claim 1, **characterized in that** the light absorbing member (140a) comprises polypropylene (PP), polyethylene (PE) or ethylene propylene diene monomer (EPDM).

3. The rechargeable battery (100) of claim 1 or 2, **characterized in that** the collector plate (130a) is welded to an end of the electrode (121) in a lengthwise direction of the electrode (121), and the light absorbing member (140a) is positioned on a side of the electrode (121) in a direction perpendicular to the lengthwise direction.

4. The rechargeable battery (100) of any of claims 1 to 3, **characterized in that** the electrode (121) comprises an active material coating portion (121c) and an active material non-coating portion (121a), wherein the collector plate (130a) is welded to and the light absorbing member (140a) is coupled to the active material non-coating portion (121a).

5. The rechargeable battery (100) of claim 4, **characterized in that** the collector plate (130a) and the active material non-coating portion (121a) are laser-welded to each other at a laser-welded portion, wherein the light absorbing member (140a) defines a barrier between the laser-welded portion and the active material coating portion (121 c).

6. The rechargeable battery (100) of claim 4 or 5, **characterized in that** the light absorbing member (140a) is positioned between the active material coating portion (121c) and the collector plate (130a).

7. The rechargeable battery (100) of claim 6, **characterized in that** the light absorbing member (140a) fills a space between the active material coating portion (121c) and the collector plate (130a).

8. The rechargeable battery of any of claims 4 to 7, **characterized in that** the active material non-coating portion (121a) includes a first region (121a_a) parallel to a lengthwise direction of the active material coating portion (121c), a second region (121a_c) at a distance to the first region (121a_a) perpendicular to the lengthwise direction of the active material coating portion (121c), and a bent region (121a_b) formed between the first region (121a_a) and the second region (121a_c).

9. The rechargeable battery (100) of any of claims 1 to 8, **characterized in that** the battery (100) comprises two light absorbing members (140a), between which the electrode (121) extends.

10. The rechargeable battery (100) of any of claims 1 to 8, **characterized in that** the electrode assembly (120) comprises two electrodes (121) welded to the collector plate (130a), between which the light absorbing member (140a) is positioned.

11. The rechargeable battery (100) of any of claims 1 to 10, **characterized in that** the collector plate (130a) has an essentially U-shaped cross-section and encompasses the electrode (121) and the light absorbing member (140a).

12. The rechargeable battery (100) of any of claims 1 to 11, **characterized in that** the electrode assembly (120) comprises two electrodes (121, 122) and a second collector plate (130b), wherein each of the electrodes (121, 122) is welded to another one of the collector plates (130a, 130b) and wherein one light absorbing member (140a, 140b) is coupled to each of the electrodes (121, 122) and in close contact to each of the collector plates (130a, 130b).

## Patentansprüche

1. Eine wiederaufladbare Batterie (100), aufweisend eine Elektrodenanordnung (120), eine Kollektorplatte (130a), welche die Elektrodenanordnung (120) mit einem Pol (170a) der Batterie (100) verbindet, wobei die Elektrodenanordnung (120) eine Elektrode (121) umfasst, wobei die Elektrode (121) direkt an die Kollektorplatte (130a) geschweißt ist, wobei die wiederaufladbare Batterie (100) ferner ein Licht absorbierendes Element (140a) aufweist, welches mit der Elektrode (121) gekoppelt ist und welches sich in engem Kontakt mit der Kollektorplatte (130a) befindet, und wobei die Kollektorplatte (130a) eine Breite aufweist, die sich senkrecht zu einer Längsrichtung der Elektrodenanordnung (120) erstreckt, wobei die Kollektorplatte (130a) an die Elektrodenanordnung (120) geschweißt ist und das Licht absorbierenden Element (140a) über die gesamte Breite kontaktiert, **dadurch gekennzeichnet, dass** das Licht absorbierende Element (140a) ein elektrischer Isolator ist.

2. Die wiederaufladbare Batterie (100) nach Anspruch 1, **dadurch gekennzeichnet, dass** das Licht absorbierende Element (140a) Polypropylen (PP), Polyethylen (PE) oder Ethylen-Propylen-Dien-Monomer (EPDM) umfasst.

3. Die wiederaufladbare Batterie (100) nach Anspruch 1 oder 2, **dadurch gekennzeichnet, dass** die Kollektorplatte (130a) in einer Längsrichtung der Elektrode (121) an ein Ende der Elektrode (121) geschweißt ist, und das Licht absorbierende Element (140a) in einer zu der Längsrichtung senkrechten Richtung auf einer Seite der Elektrode (121) positioniert ist.

4. Die wiederaufladbare Batterie (100) nach einem der Ansprüche 1 bis 3, **dadurch gekennzeichnet, dass** die Elektrode (121) einen Abschnitt (121c) der Beschichtung mit aktivem Material und einen Abschnitt (121a) der Nicht-Beschichtung mit aktivem Material aufweist, wobei die Kollektorplatte (130a) an den Abschnitt (121a) der Nicht-Beschichtung mit aktivem Material geschweißt und das Licht absorbierende Element (140a) mit dem den Abschnitt (121a) der Nicht-Beschichtung mit aktivem Material gekoppelt ist.

5. Die wiederaufladbare Batterie (100) nach Anspruch 4, **dadurch gekennzeichnet, dass** die Kollektorplatte (130a) und der Abschnitt (121 a) der Nicht-Beschichtung mit aktivem Material an einem lasergeschweißten Abschnitt miteinander laserverschweißt sind, wobei das Licht absorbierende Element (140a) eine Barriere zwischen dem lasergeschweißten Abschnitt und dem Abschnitt (121c) der Beschichtung mit aktivem Material definiert.

6. Die wiederaufladbare Batterie (100) nach Anspruch 4 oder 5, **dadurch gekennzeichnet, dass** das Licht absorbierende Element (140a) zwischen dem Abschnitt (121c) der Beschichtung mit aktivem Material und der Kollektorplatte (130a) positioniert ist.

7. Die wiederaufladbare Batterie (100) nach Anspruch 6, **dadurch gekennzeichnet, dass** das Licht absorbierende Element (140a) einen Raum zwischen dem Abschnitt (121c) der Beschichtung mit aktivem Material und der Kollektorplatte (130a) ausfüllt.

8. Die wiederaufladbare Batterie nach einem der Ansprüche 4 bis 7, **dadurch gekennzeichnet, dass** der Abschnitt (121 a) der Nicht-Beschichtung mit aktivem Material einen ersten Bereich (121a_a), der zu einer Längsrichtung des Abschnitts (121c) der Beschichtung mit aktivem Material parallel ist, einen zweiten Bereich (121a_c) in einem zu der Längsrichtung des Abschnitts (121 c) der Beschichtung mit aktivem Material senkrechten Abstand von dem ersten Bereich (121a_a), , und einen gebogenen Bereich (121a_b), der zwischen dem ersten Bereich (121a_a) und dem zweiten Bereich (121a_c) ausgebildet ist, aufweist.

9. Die wiederaufladbare Batterie (100) nach einem der Ansprüche 1 bis 8, **dadurch gekennzeichnet, dass** die Batterie (100) zwei Licht absorbierende Elemente (140a) umfasst, zwischen denen sich die Elektrode (121) erstreckt.

10. Wiederaufladbare Batterie (100) nach einem der Ansprüche 1 bis 8, **dadurch gekennzeichnet, dass** die Elektrodenanordnung (120) zwei an die Kollektorplatte (130a) geschweißte Elektroden (121) aufweist, zwischen denen das Licht absorbierende Element (140a) positioniert ist.

11. Die wiederaufladbare Batterie (100) nach einem der Ansprüche 1 bis 10, **dadurch gekennzeichnet, dass** die Kollektorplatte (130a) einen im Wesentlichen U-förmigen Querschnitt aufweist und die Elektrode (121) und das Licht absorbierende Element (140a) umgreift.

12. Die wiederaufladbare Batterie (100) nach einem der Ansprüche 1 bis 11, **dadurch gekennzeichnet, dass** die Elektrodenanordnung (120) zwei Elektroden (121, 122) und eine zweite Kollektorplatte (130b) aufweist, wobei jede der Elektroden (121, 122) an eine andere von den Kollektorplatten (130a, 130b) geschweißt ist und wobei ein Licht absorbierende Element (140a, 140b) mit jeweils einer der Elektroden (121, 122) gekoppelt ist und sich in engem Kontakt mit jeder der Kollektorplatten (130a, 130b) befindet.

## Revendications

1. Batterie rechargeable (100) comprenant un ensemble d'électrodes (120), une plaque collectrice (130a) reliant l'ensemble d'électrodes (120) à une borne (170a) de la batterie (100), l'ensemble d'électrodes (120) comprenant une électrode (121), où l'électrode (121) est soudée directement à la plaque collectrice (130a), où la batterie rechargeable (100) comprend en outre un élément d'absorption de lumière (140a) qui est couplé à l'électrode (121) et qui est en contact étroit avec la plaque collectrice (130a), et où la plaque collectrice (130a) présente une largeur s'étendant perpendiculairement à une direction de longueur de l'ensemble d'électrodes (120), où la plaque collectrice (130a) est soudée à l'ensemble d'électrodes (120) et entre en contact avec l'élément d'absorption de lumière (140a) sur la largeur, **caractérisée en ce que** l'élément d'absorption de lumière (140a) est un isolant électrique.

2. Batterie rechargeable (100) de la revendication 1, **caractérisée en ce que** l'élément d'absorption de lumière (140a) comprend du polypropylène (PP), du polyéthylène (PE) ou un monomère d'éthylène-propylène-diène (EPDM).

3. Batterie rechargeable (100) de la revendication 1 ou 2, **caractérisée en ce que** la plaque collectrice (130a) est soudée à une extrémité de l'électrode (121) dans une direction de longueur de l'électrode (121), et l'élément d'absorption de lumière (140a) est positionné sur un côté de l'électrode (121) dans une direction perpendiculaire à la direction de longueur.

4. Batterie rechargeable (100) de l'une des revendications 1 à 3, **caractérisée en ce que** l'électrode (121) comprend une partie revêtue de matériau actif (121c) et une partie non revêtue de matériau actif (121a), où la plaque collectrice (130a) est soudée à la partie non revêtue de matériau actif (121a) et l'élément d'absorption de lumière (140a) est couplé à cette dernière.

5. Batterie rechargeable (100) de la revendication 4, **caractérisée en ce que** la plaque collectrice (130a) et la partie non revêtue de matériau actif (121a) sont soudées au laser l'une à l'autre au niveau d'une partie soudée au laser, où l'élément d'absorption de lumière (140a) définit une barrière entre la partie soudée au laser et la partie revêtue de matériau actif (121c).

6. Batterie rechargeable (100) de la revendication 4 ou 5, **caractérisée en ce que** l'élément d'absorption de lumière (140a) est positionné entre la partie revêtue de matériau actif (121c) et la plaque collectrice (130a).

7. Batterie rechargeable (100) de la revendication 6, **caractérisée en ce que** l'élément d'absorption de lumière (140a) remplit un espace entre la partie revêtue de matériau actif (121c) et la plaque collectrice (130a).

8. Batterie rechargeable de l'une des revendications 4 à 7, **caractérisée en ce que** la partie non revêtue de matériau actif (121a) comporte une première région (121a_a) parallèle à une direction de longueur de la partie revêtue de matériau actif (121c), une deuxième région (121a_c) à distance de la première région (121a_a) perpendiculaire à la direction de longueur de la partie revêtue de matériau actif (121c), et une région courbée (121a_b) formée entre la première région (121a_a) et la deuxième région (121a_c).

9. Batterie rechargeable (100) de l'une des revendications 1 à 8, **caractérisée en ce que** la batterie (100) comprend deux éléments d'absorption de lumière (140a), entre lesquels s'étend l'électrode (121).

10. Batterie rechargeable (100) de l'une des revendications 1 à 8, **caractérisée en ce que** l'ensemble d'électrodes (120) comprend deux électrodes (121) soudées à la plaque collectrice (130a), entre lesquelles est positionné l'élément d'absorption de lumière (140a).

11. Batterie rechargeable (100) de l'une des revendications 1 à 10, **caractérisée en ce que** la plaque collectrice (130a) présente une section transversale essentiellement en forme de U et entoure l'électrode (121) et l'élément d'absorption de lumière (140a).

12. Batterie rechargeable (100) de l'une des revendications 1 à 11, **caractérisée en ce que** l'ensemble d'électrodes (120) comprend deux électrodes (121, 122) et une deuxième plaque collectrice (130b), où chacune des électrodes (121, 122) est soudée à une autre plaque des plaques collectrices (130a, 130b) et où un élément d'absorption de lumière (140a, 140b) est couplé à chacune des électrodes (121, 122) et est en contact étroit avec chacune des plaques collectrices (130a, 130b).
